# EUROPÄISCHE PATENTSCHRIFT

(11) **EP 0 512 298 B1**
(45) Veröffentlichungstag und Bekanntmachung des Hinweises auf die Patenterteilung: **14.08.1996**
(21) Anmeldenummer: 92106667.6
(22) Anmeldetag: 16.04.1992
(51) Int. Cl.: B60H 1/03, B60H 1/00

(54) **Heizanlage für Fahrzeuge**
Heating device for vehicles
Dispositif de chauffage pour véhicules

(30) Priorität: 08.05.1991 DE 4115138
(43) Veröffentlichungstag der Anmeldung: 11.11.1992
(73) Patentinhaber: Firma J. Eberspächer, D-73730 Esslingen (DE)
(72) Erfinder: Schmalenbach, Dietrich, W-7348 Gruibingen (DE); Hintennach, Hans, W-7066 Baltmannsweiler (DE)
(74) Vertreter: Klunker . Schmitt-Nilson . Hirsch

(56) Entgegenhaltungen:
- DE-A- 1 961 286
- US-A- 4 381 480
- PATENT ABSTRACTS OF JAPAN vol. 8, no. 108 (M-297)(1545) 19. Mai 1984 & JP-A -59 018 015 ( MITSUBISHI ) 30. Januar 1984
- PATENT ABSTRACTS OF JAPAN vol. 13, no. 67 (M-798)(3415) 15. Februar 1989 & JP-A-63 269 717 (DIESEL KIKI CO ) 8. November 1988
- ELECTRONIC DESIGN Bd. 29, Nr. 7, 31. März 1981, Seiten 193 - 196 MORGAN '555 TIMER PROVIDES PWM DRIVE FOR LOW-COST DC MOTOR CONTROL

## Beschreibung

Die Erfindung bezieht sich auf eine Heizanlage für Fahrzeuge, aufweisend:
- ein Heizgerät, das beim Betrieb durch Verbrennung von Brennstoff Wärme erzeugt;
- einen Flüssigkeit/Luft-Wärmetauscher zur Wärmeabgabe an einen Fahrzeuginnenraum;
- einen Flüssigkeitskreislauf, der durch das Heizgerät und den Wärmetauscher führt; und
- ein dem Wärmetauscher zugeordnetes Gebläse.

Derartige Fahrzeugheizanlagen sind in vielfältigen Ausführungen bekannt (siehe z.B. DE-A-1 961 286) und werden häufig als "Standheizungen" oder "motorunabhängige Heizungen" bezeichnet, wobei man bei diesen Begriffsbildungen an das besonders häufige Einsatzgebiet der Beheizung von durch einen Verbrennungsmotor angetriebenen Kraftfahrzeugen gedacht hat; hierbei kann eine Beheizung des Fahrzeuginnenraums und/oder eine Vorwärmung des Verbrennungsmotors erfolgen, wenn das Kraftfahrzeug steht bzw. der Verbrennungsmotor nicht läuft und deshalb keine Wärme liefert.

Wenn man eine Fahrzeugheizanlage mit gegebener, wenn auch möglicherweise in ihrer Größe steuerbarer bzw. regelbarer Wärmeerzeugungsleistung betrachtet, hängt die Größe des in den zu beheizenden Fahrzeuginnenraum eingebrachten Wärmestroms außer von der Temperatur der Flüssigkeit am Eintritt in den Flüssigkeit/Luft-Wärmetauscher und außer der Temperatur der diesen Wärmetauscher beaufschlagenden Luft in erster Linie von der Förderleistung des dem Wärmetauscher zugeordneten Gebläses ab. So wird der Benutzer der bekannten Fahrzeugheizanlagen das Gebläse auf eine hohe Stufe stellen, wenn intensive Beheizung des Fahrzeuginnenraums gewünscht oder erforderlich ist. Der Benutzer wird das Gebläse niedrig einstellen, wenn eine wenig intensive Beheizung gewünscht oder ausreichend ist.

Bei bisher bekannten Fahrzeuggebläsen sind Ohmsche Vorwiderstandsgruppen vorgesehen, um die Gebläseleistung einstellen zu können. Die Vorviderstände wandeln elektrische Energie in Abwärme, wenn das Gebläse nicht auf maximale Gebläseleistung gestellt ist. Somit wird unabhängig von der Einstellung der Gebläseleistung in etwa immer soviel elektrische Energie verbraucht, wie der maximalen Stromaufnahme des Gebläsemotors entspricht.

Der Erfindung liegt die Aufgabe zugrunde, eine Heizanlage der eingangs genannten Art verfügbar zu machen, die eine automatische Regelung der Temperatur des Fahrzeuginnenraums bei minimiertem Stromverbrauch ermöglicht.

Zur Lösung dieser Aufgabe ist die Fahrzeugheizanlage erfindungsgemäß gekennzeichnet durch
- einen mit dem Motor des Gebläses verbundenen, elektrischen Schaltregler für die Gebläseleistung, der stufenlos und im wesentlichen verlustfrei arbeitet;
- einen dem Flüssigkeitskreislauf angehörenden Bypass des Wärmetauschers;
- ein elektrisch verstellbares Ventil in dem Flüssigkeitskreislauf, welches das Ausmaß der Durchströmung des Wärmetauschers und des Bypass bestimmt;
- einen Fahrzeuginnenraum-Temperaturfühler; und
- eine mit diesem Temperaturfühler verbundene, elektrische Regeleinrichtung, die den Schaltregler und das Ventil ansteuert.

Es wird ausdrücklich darauf hingewiesen, daß auch eine Fahrzeugheizanlage, die von den vorstehenden fünf Kennzeichnungsmerkmalen nur das erste, das vierte und das fünfte Kennzeichnungsmerkmal, allerdings ohne die Worte "und das Ventil", aufweist, als eigene Erfindung angesehen wird. Mit anderen Worten: Die erfindungsgemäße Heizanlage kann auch ohne den Bypass des Wärmetauschers und das die Bypass-Durchströmung bestimmende Ventil ausgeführt sein.

Die erfindungsgemäße Regeleinrichtung berücksichtigt den Unterschied zwischen der Solltemperatur des Fahrzeuginnenraums und der durch den Temperaturfühler erfaßten Isttemperatur des Fahrzeuginnenraums. Als Stellglieder sind mindestens der Schaltregler und das elektrisch verstellbare Ventil vorgesehen. Da der Schaltregler im wesentlichen verlustfrei arbeitet, ist eine wesentliche Quelle unerwünschten Stromverbrauchs, nämlich die bisher üblichen Ohmschen Vorwiderstände, eliminiert. Die Reduzierung des Stromverbrauchs von Fahrzeugheizanlagen ist ein wichtiges Ziel, weil Fahrzeugheizanlagen von dem begrenzten Vorrat elektrischer Energie in den Fahrzeugbatterien zehren müssen.

Bevorzugte Ausgestaltungen der Erfindung sind in den abhängigen Ansprüchen angegeben.

Bevorzugt bei der erfindungsgemäßen Heizanlage einsetzbare, im wesentlichen verlustfrei arbeitende Schaltregler sind DC/DC-Wandler und mit Rulsweitenmodulation arbeitende Schaltregler. Als elektrisch verstellbares Ventil finden vorzugsweise ein 3/2-Wege-Verteilerventil oder ein 3/2-Wege-Mischventil Verwendung.

Die erfindungsgemäße Heizanlage ist vorzugsweise in den Kühlmittel- und Heizungskreislauf eines Kraftfahrzeug-Verbrennungsmotors, der dem Antrieb des Fahrzeugs dient, eingebunden. Besonders bevorzugt findet die erfindungsgemäße Heizanlage Verwendung zur Beheizung von Fahrerkabinen von Lastkraftwagen. Es ist erwünscht, Fahrerkabinen von Lastkraftwagen beheizen zu können, insbesondere wenn der oder die Fahrer des Lastkraftwagens in der Fahrerkabine schlafen.

Es wird jedoch darauf hingewiesen, daß die erfindungsgemäße Heizanlage auch für andere Fahrzeuge einsetzbar ist, insbesondere Omnibusse, Personenkraftwagen, Baumaschinen, Wohnwagen, Wohnmobile und Boote.

Die Erfindung und Ausgestaltungen der Erfindung werden nachfolgend an einem teilweise schematisiert dargestellten Ausführungsbeispiel noch näher erläutert.

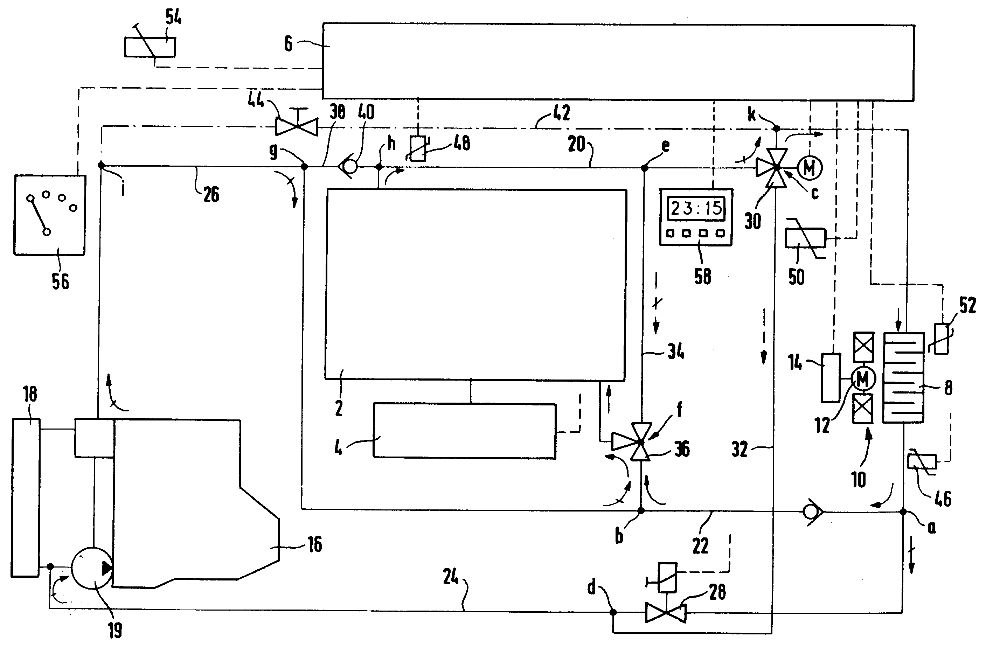

Die einzige Zeichnungsfigur zeigt eine Fahrzeugheizanlage einschließlich Einbindung in den Kühlmittel- und Heizungskreislauf eines dem Fahrzeugantrieb dienenden Verbrennungsmotors, wobei der Verbrennungsmotor, das eigentliche Heizgerät und die Regeleinrichtung schematisiert eingezeichnet sind.

Abgesehen von Flüssigkeitsleitungen, diversen Fühlern, diversen Stellgliedern, elektrishcen Verbindungen und Bedienungselementen besteht die gezeichnete Heizanlage im wesentlichen aus einem Heizgerät 2, einem dem Heizgerät 2 zugeordneten Steuergerät 4, einer elektrischen bzw. elektronischen Regeleinrichtung 6, einem Flüssigkeit/Luft-Wärmetauscher 8 sowie einem dem Wärmetauscher 8 zugeordneten Gebläse 10 mit Gebläsemotor 12 und elektrischem Schaltregler 14. Außerdem ist ein Verbrennungsmotor 16, Ottomotor oder Dieselmotor, mit seinem zugeordneten Kühler 18 und seiner Wasserpumpe 19 gezeichnet, in dessen Kühlmittel- und Heizungskreislauf die angesprochene Heizanlage eingebunden ist.

Die diversen, eingezeichneten Flüssigkeitsleitungen kann man in ihrem Funktionszweck am leichtesten verstehen, wenn man die nachfolgend beschriebenen Kreisläufe und Kreislaufteile der Reihe nach betrachtet:

Ein erster Kreislauf, der mit durchgezogenen Pfeilen markiert ist, führt mit einem ersten Kreislaufabschnitt 20 von dem Ausgang des Heizgeräts 2 zu dem Eingang des Wärmetauschers 8 und führt mit einem zweiten Kreislaufabschnitt von dem Ausgang des Wärmetauschers 8 zurück zu dem Eingang des Heizgeräts 2. An einem Punkt a zweigt von dem zweiten Kreislaufabschnitt 22 ein dritter Kreislaufabschnitt 24 ab, der zu dem Verbrennungsmotor 16 führt. Von dem Verbrennungsmotor 16 führt ein vierter Kreislaufabschnitt 26 zu einem Punkt d ein Stück stromabwärts von dem Punkt a in dem zweiten Kreislaufabschnitt 22. In dem dritten Kreislaufabschnitt 24 sitzt ein wahlweise auf "offen" oder "zu" stellbares Magnetventil 28.

Flüssigkeit, die durch den ersten Kreislauf, beinhaltend den ersten Kreislaufabschnitt 20 und den zweiten Kreislaufabschnitt 22, strömt, transportiert Wärme nur zu dem Wärmetauscher 8. Das Gebläse 10 fördert im eingeschalteten Zustand Luft, d.h. von außen angesaugte Umgebungsluft und/oder aus dem Fahrzeuginnenraum angesaugte Luft (Umluftbetrieb), über den Wärmetauscher 8 und bläst die dort erwärmte Luft zur Beheizung in den Fahrzeuginnenraum. Wenn das Magnetventil 28 auf "offen" steht, strömt ein Teil der Flüssigkeit durch den dritten Kreislaufabschnitt 24, den Verbrennungsmotor 16 und den vierten Kreislaufabschnitt 26, statt direkt über den zweiten Kreislaufabschnitt 22 zurück zu dem Heizgerät 2 zu strömen. Auf diese Weise wird Wärme nicht nur zur Beheizung des Fahrzeuginnenraums, sondern auch zur Erwärmung des Verbrennungsmotors 16, insbesondere zur Sicherung der Startfähigkeit des Verbrennungsmotors 16 bei niedrigen Umgebungstemperaturen, bereitgestellt.

An einem Punkt c sitzt in dem ersten Kreislaufabschnitt 20 ein 3/2-Wege-Verteilerventil 30, das beispielsweise mittels eines kleinen Elektromotors stufenlos verstellbar ist. Von dem Punkt c führt ein fünfter Kreislaufabschnitt 32 zu einem Punkt d in dem dritten Kreislaufabschnitt 24, und zwar dort zwischen dem Magnetventil 28 und dem Verbrennungsmotor 16. Der fünfte Kreislaufabschnitt ist mit einem gestrichelten Pfeil gekennzeichnet.

Wenn das Verteilerventil 30 in einer ersten Extremstellung "alle von dem Heizgerät 2 kommende Flüssigkeit zu dem Wärmetauscher 8" steht, wird der fünfte Kreislaufabschnitt 32 überhaupt nicht durchströmt. Wenn das Verteilerventil 30 in einer zweiten Extremstellung "alle von dem Heizgerät 2 kommende Flüssigkeit durch den fünften Kreislaufabschnitt" steht, wird der Wärmetauscher 8 überhaupt nicht durchströmt. Bei Zwischenstellungen des Verteilerventils 30 wird sowohl der Wärmetauscher 8 als auch der fünfte Kreislaufabschnitt 32 durchströmt, wobei das Verhältnis der beiden Durchströmungsmengen von der Stellung des Verteilerventils 30 abhängt. Der fünfte Kreislaufabschnitt 32 stellt somit einen hinsichtlich seiner Durchströmungsmenge stufenlos einstellbaren Bypass für den Wärmetauscher 8 dar.

Statt des Verteilerventils 30 an dem Punkt c kann man auch ein 3/2-Wege- Mischventil an dem Punkt d im dritten Kreislaufabschnitt 24 vorsehen. Hierbei bleibt die beschriebene, steuerbare Bypassfunktion des fünften Kreislaufabschnitts 32 gleich.

Von einem Punkt e in dem ersten Kreislaufabschnitt 20, und zwar zwischen dem Heizgerät 2 und dem Verteilerventil 30, führt ein sechster Kreislaufabschnitt 34 zu einem Punkt f in dem zweiten Kreislaufabschnitt 22, wobei der Punkt f zwischen dem Punkt b und dem Heizgerät 2 liegt. An dem Punkt f ist ein 3/2-Wege-Thermostatventil 36 vorgesehen. Das Thermostatventil 36 kann ein elektrisch übersteuerbares Thermostatventil beispielsweise der in der Deutschen Patentanmeldung P 40 22 731.6 (EP-A-0 467 130) beschriebenen Art sein. Beim Starten des Heizgeräts 2 und damit relativ kalter Flüssigkeit in den beschriebenen Kreislaufabschnitten befindet sich das Thermostatventil 36 in einer ersten Extremstellung "offener Weg von dem sechsten Kreislaufabschnitt 34 in das Heizgerät 2", so daß aus dem Austritt des Heizgeräts 2 strömende, erwärmte Flüssigkeit in einem Kurzkreislauf auf kurzem Wege wieder zurück in den Eingang des Heizgeräts 2 strömt; hierdurch wird die Flüssigkeit in dem Kurzkreislauf und das Heizgerät 2 selbst sehr rasch erwärmt. Mit zunehmender Flüssigkeitstemperatur in dem Kurzkreislauf steuert sich das Thermostatventil 36 allmählich in seine zweite Extremstellung "Flüssigkeitsweg durch den zweiten Kreislaufabschnitt 22 offen" um; bei Erreichen dieser zweiten Extremstellung strömt durch den sechsten Kreislaufabschnitt 34 überhaupt keine Flüssigkeit mehr.

Ferner gibt es noch einen siebten Kreislaufabschnitt 38 zwischen einem Punkt g des vierten Kreislaufabschnitts 26 und einem Punkt h des ersten Kreislaufabschnitts 20. Punkt g liegt zwischen dem Verbrennungsmotor 16 und dem Punkt b. Punkt h liegt zwischen dem Heizgerät 2 und dem Punkt e. In dem siebten Kreislaufabschnitt 38 ist ein Rückschlagventil 40 vorgesehen, das in Richtung von Punkt g zu Punkt h durchströmbar ist. Der siebte Kreislaufabschnitt 38 dient als Bypass des Heizgeräts 2 statt des hinteren Teils des vierten Kreislaufabschnitts 26. Durch diesen Bypass 38 strömt die Flüssigkeit von dem Verbrennungsmotor 16 zu dem Wärmetauscher 8 bei abgeschaltetem Heizgerät 2.

Schließlich kann man noch einen achten Kreislaufabschnitt 42 vorsehen, der von einem Punkt i im vierten Kreislaufabschnitt 26 zu einem Punkt k im ersten Kreislaufabschnitt 20 führt. Punkt i liegt zwischen dem Verbrennungsmotor 16 und Punkt g. Punkt h liegt zwischen Punkt c und dem Wärmetauscher 8. In dem achten Kreislaufabschnitt 42 ist ein von Hand betätigbares Flüssigkeitsventil 44 vorgesehen. Bei Störungen der Heizanlage kann der Benutzer an dem Ventil 44 von Hand einstellen, ob erwärmte Flüssigkeit von dem Verbrennungsmotor 16 durch den Wärmeauscher 8 und von dort zurück zu dem Verbrennungsmotor 16 strömt oder nicht.

In der Nähe des Ausgangs des Wärmetauschers 8 ist ein erster Flüssigkeitstemperaturfühler 46 vorgesehen. In der Nähe des Ausgangs des Heizgeräts 2 ist ein zweiter Flüssigkeitstemperaturfühler 48 vorgesehen. Mit 50 ist ein Temperaturfühler für die Lufttemperatur im Fahrzeuginnenraum bezeichnet. Mit 52 ist ein Temperaturfühler für die Lufttemperatur an der Luftaustrittsseite des Wärmetauschers 8 bezeichnet. Die Temperaturfühler 46, 48, 50, 52, das Magnetventil 28 und das Verteilerventil 30 sind elektrisch an die Regeleinrichtung 6 angeschlossen. Ferner erkennt man einen Sollwertgeber 54 für die Temperatur des Fahrzeuginnenraums, einen Multifunktionsschalter 56 sowie eine Zeitschaltuhr 58, wobei auch diese Bauteile an die Regeleinrichtung 6 elektrisch angeschlossen sind.

Das Steuergerät 4 des Heizgeräts 2 steuert im Zusammenwirken mit diversen Fühlern, Sicherungen, Schaltern sowie den Bauteilen des Heizgeräts 2 im wesentlichen in bisher schon üblicher Weise die Grundfunktionen des Heizgeräts 2, wie Verbrennungsluftgebläse, Flüssigkeitsumwälzpumpe des Heizgeräts 2, Brennstoffdosierpumpe und dergleichen. Mit dem Multifuntkionsschalter 56 kann man diverse Funktionsweisen einstellen, wie aus/ein, maximale Beheizung der Fahrzeugfrontscheibe zur Defrostung, Beheizung von Fahrzeuginnenraum plus Verbrennungsmotor, Beheizung nur Verbrennungsmotor, Automatik.

Die diversen, vorstehend beschriebenen, elektrischen Verbindungen zu der Regeleinrichtung 6 sind mit gestrichelten Linien angedeutet, die zur Erhöhung der Übersichtlichkeit der Zeichnung teilweise nicht bis zur Regeleinrichtung 6 hinführend eingezeichnet sind. Das Steuergerät 4 ist ebenfalls mit der Regeleinrichtung 6 elektrisch verbunden. Die beschriebenen Flüssigkeitsleitungspunkte a bis k stellen jeweils Verzweigungspunkte dar.

Der Schaltregler 14 für den Gebläsemotor 12 ist vorzugsweise entweder ein DC/DC-Wandler oder ein mit Pulsweitenmodulation arbeitender Schaltregler. Derartige Schaltregler sind an sich bekannt, und der Schaltregler 14 muß deshalb hier nicht genauer beschrieben werden. Der Schaltregler 14 bzw. die Regeleinrichtung 6 ist vorzugsweise so ausgelegt, daß die Förderleistung des Gebläses 10 im wesentlichen verlustfrei und stufenlos zwischen 15% und 70% der maximalen Gebläseleistung eingestellt werden kann.

Die wichtigste Funktion der Regeleinrichtung 6 besteht darin, nach Maßgabe des Temperatur-Sollwertgebers 54 und des Innenraum-Temperaturfühlers 50 die Beheizung des Fahrzeuginnenraums so zu regeln, daß dessen Isttemperatur im wesentlichen der eingestellten Solltemperatur entspricht. Für diese Regelungsaufgagbe werden von der Regeleinrichtung 6 sowohl der Schaltregler 14 als auch das Verteilerventil 30 angesteuert. Die Regeleinrichtung 6 ist derart ausgelegt, daß bei über der Solltemperatur liegender Isttemperatur primär mittels des Schaltreglers 14 die Gebläseleistung verringert wird und sekundär, sofern noch erforderlich, das Verteilerventil 30 in Richtung Verringerung der Durchströmung des Wärmetauschers 8 verstellt wird. "Sekundär" heißt beim beschriebenen Ausführungsbeispiel, daß die Verstellung des Verteilerventils 30 erst dann einsetzt, wenn die Gebläseleistung auf 15% heruntergefahren ist. Wenn die Isttemperatur unter der Solltemperatur liegt, wird beim beschriebenen Ausführungsbeispiel primär das Verteilerventil 30 in Richtung Vergrößerung der Durchströmung des Wärmetauschers verstellt. Sekundär wird die Gebläseleistung in Richtung Vergrößerung verstellt. "Sekundär" heißt beim beschriebenen Ausführungsbeispiel, daß die Gebläseleistung erst dann erhöht wird, wenn das Verteilerventil 30 seine Extremstellung erreicht hat. "Sekundär" kann aber auch bedeuten, daß die Gebläseleistung mit zeitlicher Verzögerung vergrößert wird. Außerdem ist es alternativ möglich, zugleich mit der Verstellung des Verteilerventils 30 in Richtung Vergrößerung der Durchströmung des Wärmetauschers 8 die Gebläseleistung bereits langsam zu erhöhen.

Unter Nutzung des Temperaturfühlers 48 besteht eine weitere Funktion der Regeleinrichtung 6 darin, die Flüssigkeitstemperatur am Austritt des Heizgeräts 2 in die Regelung einzubeziehen und damit die bisher beschriebene Regelung zu modifizieren. Wenn die Flüssigkeitstemperatur am Temperaturfühler 48 relativ hoch ist, "lohnt" eine relativ hohe Gebläseleistung und umgekehrt. Außerdem ist diese "Ausnutzung" relativ hoher Flüssigkeitstemperatur durch gesteigerte Geläseleistung dann besonders lohnend, wenn die Isttemperatur des Fahrzeuginnenraums relativ weit unterhalb der Solltemperatur liegt. Diese in Weiterbildung der Erfindung bevorzugten, zusätzlichen Berücksichtigungen sind in den Ansprüchen 4 und 5 erfaßt und beansprucht.

Mittels des Temperaturfühlers 46 wird die Wärmeerzeugungsleistung des Heizgeräts 2 gesteuert. Die Flüssigkeitstemperatur am Austritt des Wärmetauschers 8 ist ein Maß dafür, wie viel Wärmeleistung der Flüssigkeit im Heizgerät 2 zuzuführen ist um am Ausgang des Heizgeräts 2 eine optimal Temperatur von vorzugsweise etwa 80° C der Flüssigkeit zu erreichen. Ein mögliches Vorgehen hierzu besteht darin, daß das Heizgerät 2 während gewisser Zeitperioden auf beispielsweise ein Viertel seiner Leistung zurückgeschaltet wird und während der restlichen Zeitperioden auf Maximalleistung geschaltet wird. Dies kann durch Reduzieren der Förderleistung der Dosierpumpe, die dem Heizgerät 2 Brennstoff, d.h. Benzin oder Dieselbrennstoff, zuführt, und durch entsprechendes Reduzieren der Drehzahl des Verbrennungsluftgebläses des Heizgeräts 2 geschehen. Der Temperaturfühler 46 kann alternativ zwischen dem Punkt b und dem Punkt f vorgesehen sein. Der Temperaturfühler 46 kann entweder an die Regeleinrichtung 6 oder an das Steuergerät 4 angeschlossen sein.

## Patentansprüche

1. Heizanlage für Fahrzeuge, aufweisend:
- ein Heizgerät (2), das beim Betrieb durch Verbrennung von Brennstoff Wärme erzeugt;
- einen Flüssigkeit/Luft-Wärmetauscher (8) zur Wärmeabgabe an einen Fahrzeuginnenraum;
- einen Flüssigkeitskreislauf, der durch das Heizgerät (2) und den Wärmetauscher (8) führt; und
- ein dem Wärmetauscher (8) zugeordnetes Gebläse (10),
gekennzeichnet durch:
- einen mit dem Motor (12) des Gebläses (10) verbundenen, elektrischen Schaltregler (14) für die Gebläseleistung, der stufenlos und im wesentlichen verlustfrei arbeitet;
- einen dem Flüssigkeitskreislauf angehörenden Bypass (32) des Wärmetauschers (8);
- ein elektrisch verstellbares Ventil (30) in dem Flüssigkeitskreislauf, welches das Ausmaß der Durchströmung des Wärmetauschers (8) und des Bypass (32) bestimmt;
- einen Fahrzeuginnenraum - Temperaturfühler (50); und
- eine mit diesem Temperaturfühler (50) verbundene, elektrische Regeleinrichtung (6), die den Schaltregler (14) und das Ventil (30) ansteuert.

2. Heizanlage nach Anspruch 1, dadurch gekennzeichnet, daß die Regeleinrichtung (6) derart angelegt ist,
- daß sie bei unter der Solltemperatur liegender Fahrzeuginnenraumtemperatur das Ventil (30) in Richtung Vergrößerung der Durchströmung des Wärmetauschers (8) ansteuert; und - gleichzeitig oder zeitverzögert, sofern noch erforderlich, - den Schaltregler (14) in Richtung Vergrößerung der Gebläseleistung ansteuert; und
- daß sie bei über der Solltemperatur liegender Fahrzeuginnenraumtemperatur primär den Schaltregler (14) in Richtung Verringerung der Gebläseleistung ansteuert und sekundär, sofern noch erforderlich, das Ventil (30) in Richtung Verringerung der Durchströmung des Wärmetauschers (8) ansteuert.

3. Heizanlage nach Anspruch 1 oder 2, dadurch gekennzeichnet, daß an einer Stelle des Flüssigkeitskreislaufs, die zwischen dem Ausgang des Wärmetauschers (8) und dem Eingang des Heizgeräts (2) liegt, ein Flüssigkeitstemperaturfühler (46) vorgesehen ist; und daS die Regeleinrichtung (6) oder ein Steuergerät (4) des Heizgeräts (2) derart ausgebildet ist, daß die Wärmeerzeugungsleistung des Heizgeräts in Abhängigkeit von der Differenz zwischen einer Optimaltemperatur der Flüssigkeit und der von diesem Flüssigkeitstemperaturfühler erfaßten Temperatur geregelt wird.

4. Heizanlage nach mindestens einem der Ansprüche 1 bis 3, dadurch gekennzeichnet, daß an einer Stelle des Flüssigkeitskreislaufs, die zwischen dem Ausgang des Heizgeräts (2) und dem Wärmetauscher (8) liegt, ein Flüssigkeitstemperaturfühler (48) vorgesehen ist; und daß die Regeleinrichtung (6) derart ausgebildet ist, daß - wenn man ansonsten gleiche Bedingungen voraussetzt - bei höherer, von diesem Flüssigkeitstemperaturfühler (48) erfaßter Temperatur über den Schaltregler (14) eine größere Gebläseleistung eingestellt wird und bei niedrigerer, von diesem Flüssigkeitstemperaturfühler (48) erfaßter Temperatur über den Schaltregler (14) eine kleinere Gebläseleistung eingestellt wird.

5. Heizanlage nach Anspruch 4, dadurch gekennzeichnet, daß die Regeleinrichtung (6) derart ausgebildet ist, daß die von diesem Flüssigkeitstemperaturfühler (48) erfaßte Temperatur mit zunehmendem Unterschied zwischen der Solltemperatur des Fahrzeuginnenraums und der Fahrzeuginnenraumtemperatur stärker berücksichtigt wird.

6. Heizanlage nach mindestens einem der Ansprüche 1 bis 5, dadurch gekennzeichnet, daß der Schaltregler (14) ein DC/DC-Wandler ist.

7. Heizanlage nach mindestens einem der Ansprüche 1 bis 5, dadurch gekennzeichnet, daß der Schaltregler (14) ein mit Pulsweitenmodulation arbeitender Schaltregler ist.

8. Heizanlage nach mindestens einem der Ansprüche 1 bis 7, dadurch gekennzeichnet, daß das elektrisch verstellbare Ventil (30) ein 3/2-Wege-Verteilerventil oder ein 3/2-Wege-Mischventil ist.

9. Heizanlage nach mindestens einem der Ansprüche 1 bis 8, dadurch gekennzeichnet, daß sie in den Kühlmittel- und Heizungskreislauf eines Kraftfahrzeug-Verbrennungsmotors (16) eingebunden ist.

10. Heizanlage nach mindestens einem der Ansprüche 1 bis 9, dadurch gekennzeichnet, daß sie als Heizung der Fahrerkabine eines Lastkraftwagens vorgesehen ist.

## Claims

1. A heating arrangement for vehicles having:
- a heating device (2), which generates heat during operation by the combustion of fuel;
- a liquid/air heat exchanger (8) for emitting heat into a vehicle interior;
- a liquid cycle which runs through the heating device (2) and the heat exchanger (8); and
- a fan (10) associated with the heat exchanger (8),
characterized by:
- an electric switch regulator (14) for the output of the fan, which is connected to the motor (12) of the fan (10) and which operates continuously and substantially without loss;
- a bypass (32) of the heat exchanger (8), belonging to the liquid cycle;
- an electrically adjustable valve (30) in the liquid cycle, which determines the extent of the flow through the heat exchanger (8) and through the bypass (32);
- a temperature sensor (50) for the vehicle interior; and
- an electric regulating device (6) connected to the temperature sensor (50), which triggers the switch regulator (14) and the valve (30).

2. A heating arrangement according to Claim 1, characterized in that the regulating device (6) is designed such that,
- when the temperature of the vehicle interior is below the desired temperature, it triggers the valve (30) in the direction increasing the flow through the heat exchanger (8); and - at the same time or after a time delay, if still necessary, - triggers the switch regulator (14) in the direction increasing the output of the fan; and
- when the temperature of the vehicle interior is above the desired temperature, it primarily triggers the switch regulator (14) in the direction reducing the output of the fan, and secondarily, if still necessary, triggers the valve (30) in the direction reducing the flow through the heat exchanger (8).

3. A heating arrangement according to Claim 1 or 2, characterized in that, at a point within the liquid cycle, between the exit of the heat exchanger (8) and the entry of the heating device (2), there is provided a liquid temperature sensor (46); and in that the regulating device (6) or a control device (4) of the heating device (2) is constructed such that the amount of heat generated by the heating device is regulated in dependence on the difference between an optimal temperature of the liquid and the temperature registered by this liquid temperature sensor.

4. A heating device according to at least one of Claims 1 to 3, characterized in that, at a point within the liquid cycle, between the exit of the heating device (2) and the heat exchanger (8), there is provided a liquid temperature sensor (48); and in that the regulating device (6) is constructed such that - assuming that the conditions are otherwise identical -, when the temperature registered by this liquid temperature sensor (48) is relatively high, the output of the fan is adjusted to be greater by means of the switch regulator (14) and, when the temperature registered by this liquid temperature sensor (48) is relatively low, the output of the fan is adjusted to be smaller by means of the switch regulator (14).

5. A heating arrangement according to Claim 4, characterized in that the regulating device (6) is constructed such that the temperature registered by this liquid temperature sensor (48) is taken into greater account as it shows an increasing difference between the desired temperature of the vehicle interior and the temperature of the vehicle interior.

6. A heating arrangement according to at least one of Claims 1 to 5, characterized in that the switch regulator (14) is a DC-DC converter.

7. A heating arrangement according to at least one of Claims 1 to 5, characterized in that the switch regulator (14) is a switch regulator operating with pulse-width modulation.

8. A heating arrangement according to at least one of Claims 1 to 7, characterized in that the electrically adjustable valve (30) is a 3/2-way distributor valve or a 3/2-way mixing valve.

9. A heating arrangement according to at least one of Claims 1 to 8, characterized in that it is integrated in the coolant and heating cycle of an internal combustion engine (16) of a motor vehicle.

10. A heating arrangement according to at least one of Claims 1 to 9, characterized in that it is provided to heat the driver's cab of an HGV.

## Revendications

1. Dispositif de chauffage pour véhicules, présentant :
- un appareil de chauffage (2) qui, lorsqu'il est en marche, produit de la chaleur en brûlant du combustible;
- un échangeur de chaleur liquide/air (8) pour délivrer de la chaleur à un habitacle de véhicule;
- un circuit de liquide qui passe par l'appareil de chauffage (2) et par l'échangeur de chaleur (8) ; et
- un ventilateur (10) associé à l'échangeur de chaleur (8), caractérisé par
- un régulateur électrique à commutation (14) pour la puissance du ventilateur, qui est relié au moteur (12) du ventilateur (10) et qui fonctionne de façon progressive et essentiellement sans pertes ;
- une dérivation (32) de l'échangeur de chaleur (8) qui fait partie du circuit de liquide;
- une valve réglable électriquement (30) dans le circuit de liquide, qui détermine la quantité de liquide passant dans l'échangeur de chaleur (8) et la dérivation (32) ;
- une sonde de température (50) pour l'habitacle du véhicule ; et
- un dispositif de régulation électrique (6) relié à cette sonde de température (50), qui commande le régulateur à commutation (14) et la valve (30).

2. Dispositif de chauffage selon la revendication 1, caractérisé en ce que le dispositif de régulation (6) est installé de telle manière que, lorsque la température de l'habitacle est inférieure à la température de consigne, il commande la valve (30) afin que l'échangeur de chaleur (8) soit davantage traversé, et que, simultanément ou de manière différée si cela est encore nécessaire, il commande le régulateur à commutation (14) afin d'augmenter la puissance du ventilateur, et de manière à ce que, lorsque la température dans l'habitacle du véhicule est supérieure à la température de consigne, dans un premier temps ce dispositif de régulation commande le régulateur à commutation (14) afin de réduire la puissance du ventilateur et, dans un deuxième temps, si cela est encore nécessaire, il commande la valve (30) afin que l'échangeur de chaleur (8) soit moins traversé.

3. Dispositif de chauffage selon la revendication 1 ou 2, caractérisé en ce qu'une sonde de température pour le liquide (46) est prévue en un point du circuit de liquide qui est situé entre la sortie de l'échangeur de chaleur (8) et l'entrée de l'appareil de chauffage (2), et en ce que le dispositif de régulation (6) ou un appareil de commande (4) de l'appareil de chauffage (2) est réalisé de telle manière que la puissance calorifique produite par l'appareil de chauffage est réglée en fonction de la différence entre une température optimale du liquide et la température mesurée par la sonde de température pour le liquide.

4. Dispositif de chauffage selon au moins l'une des revendications 1 à 3, caractérisé en ce qu'une sonde de température pour le liquide (48) est prévue en un point du circuit de liquide qui est situé entre la sortie de l'échangeur de chaleur (8) et l'entrée de l'appareil de chauffage (2), et en ce que le dispositif de régulation (6) est réalisé de telle manière que - en supposant des conditions par ailleurs identiques - lorsque la température mesurée par cette sonde de température pour le liquide (48) est plus élevée, le régulateur à commutation (14) règle le ventilateur sur une puissance plus élevée et que, lorsque la température mesurée par cette sonde de température pour le liquide (48) est moins élevée, le régulateur à commutation (14) règle le ventilateur sur une puissance moins élevée.

5. Dispositif de chauffage selon la revendication 4, caractérisé en ce que le dispositif de régulation (6) est réalisé de telle manière que la température mesurée par la sonde de température pour le liquide (48) est davantage prise en compte lorsque la différence entre la température de consigne de l'habitacle du véhicule et la température à l'intérieur de l'habitacle du véhicule s'accroît.

6. Dispositif selon au moins l'une des revendications 1 à 5, caractérisé en ce que le régulateur à commutation (14) est un convertisseur à courant continu.

7. Dispositif de chauffage selon au moins l'une des revendications 1 à 5, caractérisé en ce que le régulateur à commutation (14) est un régulateur à commutation fonctionnant avec une modulation d'impulsions en largeur.

8. Dispositif de chauffage selon au moins l'une des revendications 1 à 7, caractérisé en ce que la valve réglable électriquement (30) est un distributeur à 3-2 voies ou un mélangeur à 3-2 voies.

9. Dispositif de chauffage selon au moins l'une des revendications 1 à 8, caractérisé en ce qu'il est intégré dans le circuit de refroidissement et de chauffage d'un moteur à combustion interne (16) de véhicule à moteur.

10. Dispositif de chauffage selon au moins l'une des revendications 1 à 9, caractérisé en ce qu'il est prévu en tant que chauffage pour la cabine du conducteur d'un poids lourd.
